# FASCICULE DE BREVET EUROPEEN

(11) **EP 4 488 178 B1**
(45) Date de publication et mention de la délivrance du brevet: **13.08.2025**
(21) Numéro de dépôt: 24182584.3
(22) Date de dépôt: 17.06.2024
(51) Int. Cl.: B64D 27/40

(54) **ASSEMBLAGE D'UN MÂT D'ACCROCHAGE AVEC UN MOTEUR D'AÉRONEF**
MONTAGE EINES BEFESTIGUNGSMASTES MIT EINEM FLUGZEUGMOTOR
MOUNTING OF A PYLON WITH AN AIRCRAFT ENGINE

(30) Priorité: 03.07.2023 FR 2307061
(43) Date de publication de la demande: 08.01.2025
(73) Titulaire: AIRBUS OPERATIONS (S.A.S.), 31060 Toulouse (FR)
(72) Inventeur: PAUTIS, Olivier, 31060 Toulouse (FR); BERJOT, Michael, 31060 Toulouse (FR); VIGNES, Jean-Baptiste, 31060 Toulouse (FR)
(74) Mandataire: Airbus-OPS SAS

(56) Documents cités:
- EP-B1- 1 943 145
- FR-A1- 3 098 793
- US-A1- 2015 122 943

## Description

### DOMAINE TECHNIQUE

La présente invention concerne un assemblage d'un mât d'accrochage avec un moteur d'aéronef, comprenant un système d'attache se présentant sous la forme d'une attache moteur avant, où le système d'attache est compact, ainsi qu'un aéronef comportant au moins un tel assemblage.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est logé dans une nacelle et fixé au mât réacteur par l'intermédiaire d'un système d'attache moteur comprenant une attache de suspension moteur avant sur un premier plan d'interface, une attache de suspension moteur arrière sur un deuxième plan d'interface et un chemin de reprise de la poussée, qui peut être soit intégré à l'un des deux plans d'interface de suspension moteur précités, soit intégré de façon indépendante dans un troisième plan d'interface.

Il existe de nombreux types d'attaches moteur avant qui sont satisfaisantes du point de vue de leur utilisation actuelle. Mais les soufflantes des nouveaux moteurs sont de plus en plus grandes pour améliorer les performances des moteurs, ce qui réduit d'autant la distance entre les capots de la nacelle et le sol.

US2015122943 A1 divulgue une structure de pylône intégrée pour un système de propulsion qui convient pour qu'une extrémité soit connectée à une aile d'avion et que l'autre extrémité soit connectée à un moteur d'avion. La structure de pylône comprend une section de boîte de pylône formée d'un haricot supérieur et d'un haricot inférieur, d'un cadre et d'un panneau de paroi latérale. FR3098793 A1 divulgue une unité de propulsion d'aéronef comprenant une fixation de moteur avant, reliant une structure primaire et un boîtier de ventilateur. EP1943145 B1 divulgue un dispositif de fixation avant pour fixer un turboréacteur à une structure d'aéronef. Le dispositif de fixation est adapté pour absorber les charges de poussée du turboréacteur et comprend un support supérieur et un support inférieur.

Il est alors nécessaire de définir un nouvel arrangement permettant de réduire la hauteur de l'attache moteur avant pour éloigner la nacelle du sol et par voie de conséquence de rapprocher la nacelle de l'aile.

### EXPOSE DE L'INVENTION

Un objet de la présente invention est de proposer un système d'attache moteur avant pour un moteur d'aéronef comportant un mât réacteur et un carter moteur, où l'intégration assure une réduction de la hauteur de l'ensemble.

À cet effet, est proposé un assemblage d'un mât d'accrochage avec un moteur d'aéronef, le mât d'accrochage comportant une structure primaire comprenant un longeron supérieur, un longeron inférieur, des panneaux latéraux bâbord et tribord et un renfort transversal avant, l'assemblage présentant un plan médian vertical et comportant une attache moteur avant fixée au mât d'accrochage et à un carter du moteur, et comprenant:
- au niveau du plan médian vertical et sur l'un parmi le renfort transversal avant du mât d'accrochage et le carter du moteur, une chape mâle frontale,
- centrée sur le plan médian vertical et sur l'autre parmi le renfort transversal avant du mât d'accrochage et le carter du moteur, une chape femelle frontale,
- et au niveau du plan médian vertical et sur l'un parmi le longeron inférieur du mât d'accrochage et le carter du moteur, une chape mâle inférieure,
- centrée sur le plan médian vertical et sur l'autre parmi le longeron inférieur du mât d'accrochage et le carter du moteur, une chape femelle inférieure,
- pour chaque panneau latéral bâbord et tribord ou sur le renfort transversal avant, une première chape mâle bâbord et tribord s'étendant orthogonalement au plan médian vertical,
- pour le carter du moteur, des deuxièmes chapes mâle bâbord et tribord,
- au moins des premières bielles bâbord et tribord,
- un axe frontal reliant la chape mâle frontale et la chape femelle frontale,
- un axe inférieur reliant la chape mâle inférieure et la chape femelle inférieure,
- des premiers axes bâbord et tribord reliant la première chape mâle bâbord et tribord avec la première bielle bâbord et tribord,
- des deuxièmes axes bâbord et tribord reliant la deuxième chape mâle bâbord et tribord avec la première bielle bâbord et tribord.

Selon un mode de réalisation, la chape mâle frontale est agencée sur le renfort transversal avant du mât d'accrochage et la chape femelle frontale est agencée sur le carter du moteur.

Selon un mode de réalisation, la chape femelle frontale est agencée sur le renfort transversal avant du mât d'accrochage et la chape mâle frontale est agencée sur le carter du moteur.

Selon un mode de réalisation, la chape mâle inférieure est agencée sur le longeron inférieur du mât d'accrochage et la chape femelle inférieure est agencée sur le carter du moteur.

Selon un mode de réalisation, la chape femelle inférieure est agencée sur le longeron inférieur du mât d'accrochage et la chape mâle inférieure est agencée sur le carter du moteur.

Selon un mode de réalisation, le carter du moteur prend la forme d'une couronne et chaque chape femelle frontale et inférieure du carter du moteur est constituée par des parois du carter disposées de part et d'autre du plan médian vertical et constituant des excroissances du carter entre lesquelles sont disposées les chapes mâle frontale et inférieure du mât d'accrochage.

Selon un mode de réalisation, la chape mâle frontale est constituée de deux ferrures frontales.

Selon un mode de réalisation, la chape mâle inférieure est constituée de deux ferrures inférieures.

Selon un mode de réalisation, l'attache moteur avant comporte également des deuxièmes bielles bâbord et tribord, les premiers axes bâbord et tribord reliant également la première chape mâle bâbord et tribord avec la deuxième bielle bâbord et tribord, les deuxièmes axes bâbord et tribord reliant également la deuxième chape mâle bâbord et tribord avec la deuxième bielle bâbord et tribord, les première et deuxième bielles bâbord et tribord étant montées en parallèle autour des première et deuxième chapes mâle bâbord et tribord.

Selon un mode de réalisation, les axes de l'une des paires parmi la paire comportant le premier axe bâbord et le deuxième axe bâbord et la paire comportant le premier axe tribord et le deuxième axe tribord, relient le mât d'accrochage au carter du moteur de manière ajustée, les axes de l'autre des paires relient le mât d'accrochage au carter du moteur avec un jeu, l'axe inférieur relie le mât d'accrochage au carter du moteur de manière ajustée et l'axe frontal relie le mât d'accrochage au carter du moteur avec un jeu.

Selon un mode de réalisation, les axes de l'une des paires parmi la paire comportant le premier axe bâbord et le deuxième axe bâbord et la paire comportant le premier axe tribord et le deuxième axe tribord, relient le mât d'accrochage au carter du moteur de manière ajustée, les axes de l'autre des paires relient le mât d'accrochage au carter du moteur avec un jeu, l'axe inférieur relie le mât d'accrochage au carter du moteur avec un jeu et l'axe frontal relie le mât d'accrochage au carter du moteur de manière ajustée.

Il est également proposé un aéronef comportant un assemblage d'un mât d'accrochage avec un moteur d'aéronef selon l'invention.

L'invention porte ainsi sur un système d'attache moteur avant pour un moteur d'aéronef, le système d'attache moteur avant présentant un plan médian vertical et comportant :
- un mât réacteur comportant au niveau d'une partie avant, un nez présentant au niveau du plan médian vertical et à l'avant du nez, une chape mâle frontale présentant un premier alésage frontal s'étendant dans une direction transversale qui est orthogonale au plan médian vertical, et au niveau du plan médian vertical et sous le nez, une chape mâle inférieure présentant un premier alésage inférieur s'étendant dans la direction transversale, et de part et d'autre du plan médian vertical, une première chape mâle bâbord s'étendant orthogonalement au plan médian vertical et présentant un premier alésage bâbord coaxial à un premier axe bâbord parallèle à une direction longitudinale et une première chape mâle tribord s'étendant orthogonalement au plan médian vertical et présentant un premier alésage tribord coaxial à un premier axe tribord parallèle à la direction longitudinale,
- un carter du moteur comportant une chape femelle frontale présentant un deuxième alésage frontal s'étendant dans la direction transversale, une chape femelle inférieure présentant un deuxième alésage inférieur s'étendant dans la direction transversale, une deuxième chape mâle bâbord présentant un deuxième alésage bâbord s'étendant dans la direction longitudinale, et une deuxième chape mâle tribord présentant un deuxième alésage tribord s'étendant dans la direction longitudinale,
- au moins une première bielle bâbord présentant un premier et un deuxième alésages,
- au moins une première bielle tribord présentant un troisième et un quatrième alésages,
- un axe frontal s'étendant dans la direction transversale monté dans le premier alésage frontal et dans le deuxième alésage frontal,
- un axe inférieur s'étendant dans la direction transversale monté dans le premier alésage inférieur et le deuxième alésage inférieur,
- un premier axe bâbord monté dans le premier alésage bâbord et le premier alésage de la première bielle bâbord,
- un deuxième axe bâbord monté dans le deuxième alésage bâbord et le deuxième alésage de la première bielle bâbord,
- un premier axe tribord monté dans le premier alésage tribord et le premier alésage de la première bielle tribord, et
- un deuxième axe tribord monté dans le deuxième alésage tribord et le deuxième alésage de la première bielle tribord.

Un tel système d'attache présente un encombrement réduit verticalement.

Avantageusement, le carter prend la forme d'une couronne et chaque chape femelle frontale et inférieure du carter est constituée par des parois du carter disposées de part et d'autre du plan médian vertical et constituant des excroissances du carter entre lesquelles sont disposées les chapes mâle frontale et inférieure.

Avantageusement, la chape mâle frontale est constituée de deux ferrures frontales, où chaque ferrure frontale présente un sous-alésage frontal, où les deux sous-alésages frontaux se prolongent et forment le premier alésage frontal.

Avantageusement, la chape mâle inférieure est constituée de deux ferrures inférieures, où chaque ferrure inférieure présente un sous-alésage inférieur, où les deux sous-alésages inférieurs se prolongent et forment le premier alésage inférieur.

Avantageusement, ledit système d'attache moteur avant comporte également une deuxième bielle bâbord présentant un premier et un deuxième alésages, où le premier axe bâbord est également monté dans le premier alésage de la deuxième bielle bâbord, où le deuxième axe bâbord est également monté dans le deuxième alésage de la deuxième bielle bâbord, les première et deuxième bielles bâbord étant montées en parallèle autour des première et deuxième chapes mâle bâbord, et ledit système d'attache moteur avant comporte également une deuxième bielle tribord présentant un troisième et un quatrième alésages, où le premier axe tribord est également monté dans le troisième alésage de la deuxième bielle tribord, où le deuxième axe tribord est également monté dans le quatrième alésage de la deuxième bielle tribord, les première et deuxième bielles tribord étant montées en parallèle autour des première et deuxième chapes mâle tribord.

Selon un mode de réalisation particulier, les axes de l'une des paires parmi la paire comportant le premier axe bâbord et le deuxième axe bâbord et la paire comportant le premier axe tribord et le deuxième axe tribord, sont montés ajustés dans les alésages associés, les axes de l'autre des paires sont montés avec un jeu radial dans les alésages associés, l'axe inférieur est monté ajusté dans les alésages associés et l'axe frontal est monté avec un jeu radial dans les alésages associés.

Selon un mode de réalisation particulier, les axes de l'une des paires parmi la paire comportant le premier axe bâbord et le deuxième axe bâbord et la paire comportant le premier axe tribord et le deuxième axe tribord, sont montés ajustés dans les alésages associés, les axes de l'autre des paires sont montés avec un jeu radial dans les alésages associés, l'axe inférieur est monté avec un jeu radial dans les alésages associés et l'axe frontal est monté ajusté dans les alésages associés.

L'invention propose également un aéronef comportant une structure, un moteur et un système d'attache moteur avant selon l'une des variantes précédentes, où le mât réacteur est fixé à la structure et où le carter est un carter du moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention, et
Fig. 2 est une vue en perspective d'un assemblage d'un mât d'accrochage avec un moteur d'aéronef selon l'invention.

### EXPOSÉ DÉTAILLÉ DE MODES DE RÉALISATION

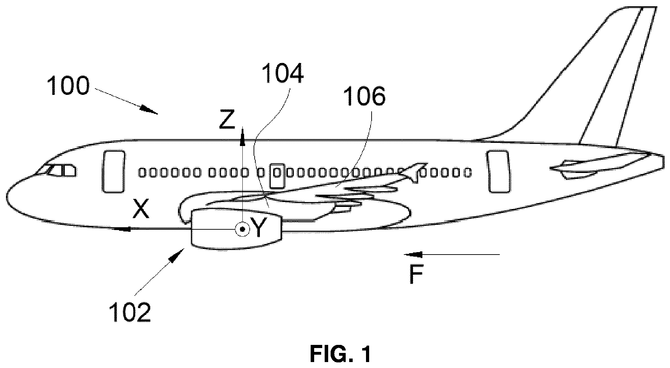

Dans la description qui suit, les termes relatifs à une position sont pris en référence à un aéronef en position d'avancement, c'est-à-dire comme l'aéronef est représenté sur la Fig. 1, où la flèche F représente la direction d'avancement.

La Fig. 1 montre un aéronef 100 qui présente un moteur 102, en particulier un turboréacteur qui est fixé sous un mât d'accrochage, également appelé mât réacteur 104, lui-même fixé sous une aile 106.

Dans la description qui suit, et par convention, on appelle X la direction longitudinale du moteur 102 orientée positivement dans le sens d'avancement de l'aéronef 100, on appelle Y la direction transversale du moteur 102 qui est horizontale lorsque l'aéronef 100 est au sol, et Z la direction verticale ou hauteur verticale lorsque l'aéronef 100 est au sol, ces trois directions X, Y et Z étant orthogonales entre elles.

Le moteur 102 présente globalement une forme de révolution autour de l'axe longitudinal X. Dans le mode de réalisation de l'invention présenté sur la Fig. 1, l'aéronef 100 comporte un moteur 102 sous chaque aile 106 de l'aéronef 100, mais il est possible de prévoir plusieurs moteurs sous chaque aile 106.

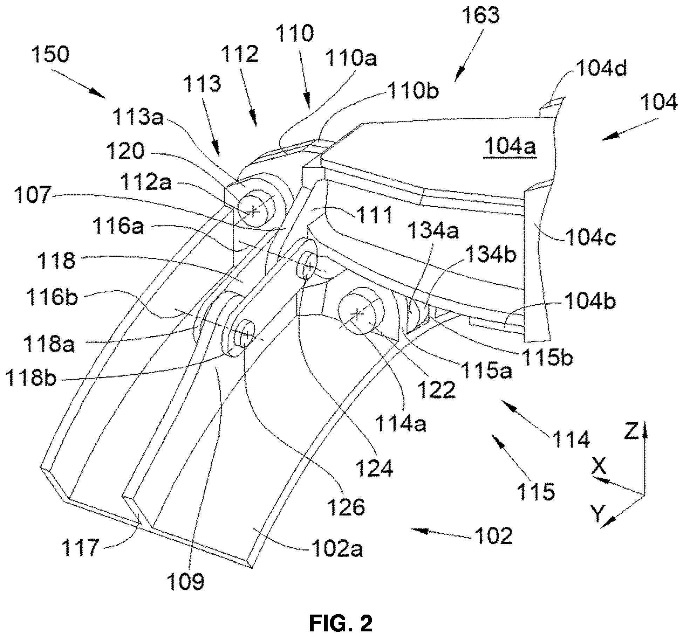

La Fig. 2 montre la partie bâbord d'un assemblage du mât d'accrochage 104 avec le moteur 102 d'aéronef, qui comporte un système d'attache moteur avant 150, également appelée attache moteur avant, pour le moteur 102 selon l'invention, la partie tribord étant globalement symétrique à la partie bâbord par rapport à un plan médian vertical XZ de l'assemblage.

L'assemblage comporte la fixation d'un carter 102a du moteur 102 au mât réacteur 104 et du mât réacteur 104 à la structure de l'aile 106 et, plus généralement à une structure de l'aéronef 100.

Le carter 102a est un carter du moteur 102 et prend ici globalement la forme d'un cylindre autour de la direction longitudinale X. Le moteur 102 n'est pas décrit plus en détails car ce moteur peut prendre toute forme connue de l'homme du métier.

L'assemblage est fixé à la structure de l'aéronef 100, ici la structure de l'aile 106, et s'étend sous l'aile 106 et supporte le moteur 102 par l'intermédiaire du carter 102a du moteur 102. Classiquement, une attache moteur arrière est fixée entre le mât réacteur 104 et une partie arrière du moteur 102 et elle peut prendre toute forme connue de l'homme du métier.

Le mât réacteur 104 prend la forme d'un caisson qui comporte une paroi supérieure 104a, également appelée longeron supérieur, une paroi inférieure 104b, également appelée longeron inférieur, et deux parois latérales 104c-d, également appelées panneaux latéraux bâbord et tribord. Les différentes parois 104a-d sont solidaires les unes des autres de manière à former un caisson dont la section verticale est globalement trapézoïdale.

Le mât réacteur 104 comporte au niveau d'une partie avant 163 du caisson, un renfort transversal avant, également appelé nez 110, fixé au niveau de la partie avant 163 par tous moyens connus, comme par soudure ou par mise en place de boulons. La partie avant 163 correspond aux extrémités avant des parois 104a-d.

Dans la description qui suit, seuls les éléments qui sont à bâbord sont visibles sur la Fig. 2, mais les éléments qui sont à tribord sont symétriques par rapport au plan médian vertical XZ.

Le nez 110 présente au niveau du plan médian vertical XZ et à l'avant du nez 110, une chape mâle frontale 112 qui est traversée par un premier alésage frontal coaxial à un axe frontal 112a. Autrement dit, le renfort transversal avant 110 comporte la chape mâle frontale 112 au niveau du plan médian vertical XZ. Selon un autre mode de réalisation, le renfort transversal avant 110 comporte une chape femelle frontale centrée sur le plan médian vertical XZ.

La paroi inférieure 110 (ou sous le nez 110) présente au niveau du plan médian vertical XZ, une chape mâle inférieure 114 qui est traversée par un premier alésage inférieur coaxial à un axe inférieur 114a. L'axe inférieur 114a est ici parallèle à l'axe frontal 112a. Les axes inférieur 114a et frontal 112a s'étendent tous les deux dans la direction transversale Y perpendiculaire au plan médian vertical XZ, et s'étendent donc ici globalement parallèlement à la direction transversale Y. Autrement dit, le longeron inférieur 104b comporte la chape mâle inférieure 114 au niveau du plan médian vertical XZ. Selon un autre mode de réalisation, le longeron inférieur 104b comporte une chape femelle inférieure centrée sur le plan médian vertical XZ. Selon un autre mode de réalisation, le renfort transversal 110 comporte la chape mâle inférieure 114 au niveau du plan médian vertical XZ, sous ledit renfort transversal avant 110. Selon un autre mode de réalisation, le renfort transversal 110 comporte une chape femelle inférieure centrée sur le plan médian vertical XZ, agencée sous le renfort transversal 110.

De part et d'autre du plan médian vertical XZ, le nez 110 présente un raidisseur latéral 111 qui s'étend perpendiculairement au plan médian vertical XZ. Il y a ainsi un raidisseur latéral bâbord 111 qui comporte une première chape mâle bâbord 107 s'étendant orthogonalement au plan médian vertical XZ et traversée par un premier alésage bâbord coaxial à un premier axe bâbord 116a et un raidisseur latéral tribord qui comporte une première chape mâle tribord s'étendant orthogonalement au plan médian vertical XZ et traversée par un premier alésage tribord coaxial à un premier axe tribord. Autrement dit, le renfort transversal avant 110 comporte des premières chapes mâle bâbord 107 et tribord s'étendant orthogonalement au plan médian vertical XZ. Selon un mode de réalisation, les parois latérales ou panneaux latéraux bâbord et tribord 104c-d comportent chacun une première chape mâle bâbord 107 et tribord s'étendant orthogonalement au plan médian vertical XZ.

Le carter 102a prend ici la forme d'une couronne et comporte une chape femelle frontale 113 traversée par un deuxième alésage frontal coaxial à l'axe frontal 112a. Selon un mode de réalisation, le carter 102a du moteur 102 comporte une chape mâle frontale.

Le carter 102a présente également une chape femelle inférieure 115 qui est traversée par un deuxième alésage inférieur coaxial à l'axe inférieur 114a. Selon un mode de réalisation, le carter 102a du moteur 102 comporte une chape mâle inférieure.

Chaque chape femelle 113, 115 du carter 102a du moteur 102 est constituée de deux parois 113a (une seule est visible sur la Fig. 2), 115a-b qui sont de part et d'autre du plan médian vertical XZ. La chape mâle frontale 112 et la chape mâle inférieure 114 du mât d'accrochage 104 sont agencées entre les deux parois 113a, 115a-b du carter 102a du moteur 102 pour former une liaison du type chape.

Les deux parois 113a, 115a-b formant chaque chape femelle 113, 115 sont ainsi globalement parallèles au plan médian vertical XZ et chacune est traversée par un alésage qui forme avec l'alésage de l'autre paroi, le deuxième alésage frontal ou le deuxième alésage inférieur.

De part et d'autre du plan médian vertical XZ, le carter 102a présente une bride latérale 117 qui s'étend perpendiculairement au plan médian vertical XZ. Il y a ainsi une bride latérale bâbord 117 qui comporte une deuxième chape mâle bâbord 109 qui est traversée par un deuxième alésage bâbord coaxial à un deuxième axe bâbord 116b et une bride latérale tribord qui comporte une deuxième chape mâle tribord qui est traversée par un deuxième alésage tribord coaxial à un deuxième axe tribord. Le deuxième alésage bâbord/tribord est à l'extérieur par rapport au premier alésage bâbord/tribord du raidisseur latéral bâbord 111.

Le premier axe bâbord 116a est parallèle au deuxième axe bâbord 116b et distinct dudit deuxième axe bâbord 116b. De la même façon, le premier axe tribord est parallèle au deuxième axe tribord et distinct dudit deuxième axe tribord.

L'attache moteur avant 150 comporte également une paire de bielles bâbord 118 comprenant une première bielle bâbord 118a présentant un premier et un deuxième alésages et une deuxième bielle bâbord 118b présentant un premier et un deuxième alésages, ainsi qu'une paire de bielles tribord comprenant des première et deuxième bielles tribord présentant chacune un troisième et un quatrième alésages. Les paires de bielles 118 sont disposées de part et d'autre du plan médian vertical XZ et chaque bielle 118 s'inscrit ici dans un plan latéral YZ.

Pour des raisons de sécurité, les première et deuxième bielles bâbord 118a-b sont montées en parallèle l'une de l'autre, autour des première et deuxième chapes mâle bâbord 107, 109, entre les premier axe 124 et deuxième axe 126 associés. Chaque première et deuxième bielle bâbord 118a-b est ainsi percée d'un alésage permettant la réception de l'axe 124, 126 correspondant. Ainsi en cas de rupture de l'une des première et deuxième bielles bâbord 118a-b, la paire de bielles tribord prend le relais.

Chaque paire de bielles 118 forme une chape femelle dans laquelle sont disposés le raidisseur latéral 111 du nez 110 et la bride latérale 117 du carter 102a.

L'attache moteur avant 150 comporte également un axe frontal 120 (également appelé arbre frontal) s'étendant dans la direction transversale Y et monté dans le premier alésage frontal et dans le deuxième alésage frontal, pour réaliser un assemblage du type chape entre la chape mâle frontale 112 et la chape femelle frontale 113, c'est-à-dire une liaison pivot autour de l'axe frontal 112a. Autrement dit, l'axe frontal 120 relie la chape mâle frontale 112 et la chape femelle frontale 113.

L'attache moteur avant 150 comporte également un axe inférieur 122 (également appelé arbre inférieur) s'étendant dans la direction transversale Y et monté dans le premier alésage inférieur et le deuxième alésage inférieur, pour réaliser un assemblage du type chape entre la chape mâle inférieure 114 et la chape femelle inférieure 115, c'est-à-dire une liaison pivot autour de l'axe inférieur 114a. Autrement dit, l'axe inférieur 122 relie la chape mâle inférieure 114 et la chape femelle inférieure 115.

L'attache moteur avant 150 comporte également un premier axe bâbord 124 (également appelé premier arbre bâbord) monté dans le premier alésage bâbord, dans le premier alésage de la première bielle bâbord 118a et dans le premier alésage de la deuxième bielle bâbord 118b, pour réaliser une liaison pivot entre le premier alésage bâbord et la paire de bielles bâbord 118 autour du premier axe bâbord 116a. Autrement dit, le premier axe bâbord 124 relie la première chape mâle bâbord 107 et la première bielle bâbord 118a.

L'attache moteur avant 150 comporte également un deuxième axe bâbord 126 (également appelé deuxième arbre bâbord) monté dans le deuxième alésage bâbord, dans le deuxième alésage de la première bielle bâbord 118a et dans le deuxième alésage de la deuxième bielle bâbord 118b, pour réaliser une liaison pivot entre le deuxième alésage bâbord et la paire de bielles bâbord 118 autour du deuxième axe bâbord 116b. Autrement dit, le deuxième axe bâbord 126 relie la deuxième chape mâle bâbord 109 et la première bielle bâbord 118a.

Un montage symétrique est prévu pour la bielle tribord, avec un premier axe tribord (également appelé premier arbre tribord) monté dans le premier alésage tribord et le premier alésage des première et deuxième bielles de la paire de bielles tribord pour réaliser une liaison pivot autour du premier axe tribord, et un deuxième axe tribord (également appelé deuxième arbre tribord) monté dans le deuxième alésage tribord et le deuxième alésage des première et deuxième bielles de la paire de bielles tribord pour réaliser une liaison pivot autour du deuxième axe tribord. Autrement dit, le premier axe tribord relie la première chape mâle tribord et la première bielle tribord et le deuxième axe tribord relie la deuxième chape mâle tribord et la première bielle tribord.

Dans cet assemblage, d'une part, l'axe frontal 112a et l'axe inférieur 114a s'étendent dans la direction transversale Y et sont perpendiculaires au plan médian XZ et, d'autre part, le premier axe bâbord 116a, le premier axe tribord, le deuxième axe bâbord 116b et le deuxième axe tribord sont parallèles au plan médian XZ, et ici globalement parallèle à la direction longitudinale X. Un tel assemblage permet de réduire la hauteur du carter 102a et permet également de réduire la hauteur de la ligne aérodynamique supérieure de la veine secondaire du moteur 102, appelée « ligne de crête » (ou « crest line » en langue anglo-saxonne), c'est-à-dire la veine autour du nez 110.

Les différents axes sont bloqués en translation par tous moyens appropriés et connus de l'homme du métier tels que des écrous, et chaque arbre est coaxial à l'axe considéré.

Avec une telle attache moteur avant 150 et une attache moteur arrière appropriée, le système global d'attache moteur est dit 'isostatique', c'est-à-dire que les translations selon les trois directions X, Y et Z et les trois rotations autour de ces mêmes axes (Mx, My, Mz) sont bloquées. L'attache moteur avant 150 permet de contrôler les efforts tranchants selon les trois directions X, Y et Z et par combinaison avec une attache moteur arrière appropriée, les moments My et Mz.

Les efforts en X et Z sont régis par l'intermédiaire de l'axe frontal 120 et de l'axe inférieur 122 et les efforts Y sont régis par l'intermédiaire des bielles 118.

Dans le mode de réalisation de l'invention présenté à la Fig. 2, le carter 102a prend la forme d'une couronne continue sur 360° et comporte la chape femelle centrale 113, qui comporte les parois 113a, formant des excroissances du carter 102a, et la chape femelle inférieure 115, qui comporte les parois 115a-b, formant des excroissances du carter 102a. Chaque chape femelle 113, 115 du carter 102a est ainsi constituée par les parois 113a, 115a-b du carter 102a. Les parois 113a, 115a-b sont intégrées au carter 102a, et forment des excroissances du carter 102a. Les parois 113a, 115a-b peuvent être réalisées par tout procédé, par exemple ces parois peuvent être moulées, coulées, soudées ou usinées dans la masse. Les chapes mâles frontale 112 et inférieure 114 sont ainsi respectivement logées entre les parois 113a de la chape femelle centrale 113 et entre les parois 115a-b de la chape femelle inférieure 115. Les parois 113a, 115a-b forment ainsi des oreilles, situées de part et d'autre du plan médian vertical XZ, et entre lesquelles les chapes mâles frontale 112 et inférieure 114 sont agencées.

De la même manière, pour des raisons de sécurité, la chape mâle frontale est composée de deux ferrures frontales 110a-b, qui sont ici symétriques par rapport au plan médian vertical XZ. Les deux ferrures frontales 110a-b sont disposées de part et d'autre du plan médian vertical XZ et elles sont fixées l'une à l'autre et au mât réacteur 104 par tous moyens de fixation appropriés comme des éléments de visserie, des points de soudure, etc. Les deux ferrures frontales 110a-b peuvent être usinées dans la masse.

Chaque ferrure frontale 110a-b présente un sous-alésage frontal, et les deux sous-alésages frontaux se prolongent et forment le premier alésage frontal.

De la même manière, pour des raisons de sécurité, la chape mâle inférieure 114 est composée de deux ferrures inférieures 134a-b, qui sont ici symétriques par rapport au plan médian vertical XZ. Les deux ferrures inférieures 134a-b sont disposées de part et d'autre du plan médian vertical XZ et elles sont fixées l'une à l'autre et au mât réacteur 104 par tous moyens de fixation appropriés comme des éléments de visserie, des points de soudure, etc. Les deux ferrures inférieures 134a-b peuvent être usinées dans la masse.

Chaque ferrure inférieure 134a-b présente un sous-alésage inférieur, et les deux sous-alésages inférieurs se prolongent et forment le premier alésage inférieur.

Lorsque le moteur 102 est en fonctionnement, des efforts sont générés et sont transmis à la structure de l'aile à travers l'attache moteur avant 150, c'est-à-dire, entre autres, le carter 102a et le mât réacteur 104, à travers un chemin primaire d'efforts.

Ainsi, certains éléments de l'attache moteur avant 150 réalisent le chemin primaire d'efforts tandis que d'autres éléments assurent des chemins secondaires d'efforts qui compensent une défaillance du chemin primaire d'efforts, ces autres éléments constituant des moyens de sécurité en attente (dit « waiting fail-safe » en langue anglo-saxonne).

Selon un premier mode de réalisation de l'invention, les axes de l'une des paires parmi la paire comportant le premier axe bâbord 124 et le deuxième axe bâbord 126 et la paire comportant le premier axe tribord et le deuxième axe tribord, sont montés ajustés dans les alésages associés. Autrement dit, les axes de l'une des paires parmi la paire comportant les premier et deuxième axes bâbord 124, 126 et la paire comportant les premier et deuxième axes tribord, relient le mât d'accrochage 104 au carter 102a du moteur 102 de manière ajustée. C'est-à-dire que soit les axes bâbord 124 et 126 et la paire de bielles 118 associée assurent le chemin primaire d'efforts, soit les axes tribord et la paire de bielles associée assurent le chemin primaire d'efforts.

Selon ce premier mode de réalisation, les axes de l'autre paire sont montés avec un jeu radial dans les alésages associés, c'est-à-dire, les axes de l'autre paire assurent le chemin secondaire d'efforts. Autrement dit, les axes de l'autre des paires relient le mât d'accrochage 104 au carter 102a du moteur 102 sont montés avec un jeu.

Toujours dans ce premier mode de réalisation, l'axe inférieur 122 est monté ajusté dans les alésages associés pour assurer le chemin primaire d'efforts et l'axe frontal 120 est monté avec un jeu radial dans les alésages associés pour assurer le chemin secondaire d'efforts. Autrement dit, l'axe inférieur 122 relie le mât d'accrochage 104 au carter 102a du moteur 102 de manière ajustée et l'axe frontal 120 relie le mât d'accrochage 104 au carter 102a du moteur 102 avec un jeu.

Selon un deuxième mode de réalisation de l'invention, et comme pour le premier mode de réalisation, les axes de l'une des paires parmi la paire comportant le premier axe bâbord 124 et le deuxième axe bâbord 126 et la paire comportant le premier axe tribord et le deuxième axe tribord, sont montés ajustés dans les alésages associés. C'est-à-dire que soit les axes bâbord 124 et 126 et la paire de bielles 118 associée assurent le chemin primaire d'efforts, soit les axes tribord et la paire de bielles associée assurent le chemin primaire d'efforts.

Selon ce deuxième mode de réalisation, les axes de l'autre paire sont montés avec un jeu radial dans les alésages associés pour assurer le chemin secondaire d'efforts.

Dans ce deuxième mode de réalisation, l'axe inférieur 122 est monté avec un jeu radial dans les alésages associés pour assurer le chemin secondaire d'efforts et l'axe frontal 120 est monté ajusté dans les alésages associés pour assurer le chemin primaire d'efforts. Autrement dit, l'axe inférieur 122 relie le mât d'accrochage 104 au carter 102a du moteur 102 avec un jeu et l'axe frontal 120 relie le mât d'accrochage 104 au carter 102a du moteur 102 de manière ajustée.

Les montages ajustés permettent un transfert des efforts directement d'une pièce à l'autre, tandis que la présence d'un jeu ne permet pas le transfert des efforts directement. Ce transfert d'efforts devient possible que si un élément du chemin primaire d'efforts est défaillant et que deux éléments qui sont montés avec jeu l'un par rapport à l'autre se déplacent pour annuler le jeu et venir en contact, et ainsi assurer le transfert d'efforts.

## Revendications

1. Assemblage d'un mât d'accrochage (104) avec un moteur d'aéronef (100), le mât d'accrochage (104) comportant une structure primaire comprenant un longeron supérieur (104a), un longeron inférieur (104b), des panneaux latéraux bâbord et tribord (104c-d) et un renfort transversal avant (110), l'assemblage présentant un plan médian vertical (XZ) et comportant une attache moteur avant (150) fixée au mât d'accrochage (104) et à un carter (102a) du moteur (102), et comprenant:
- au niveau du plan médian vertical (XZ) et sur l'un parmi le renfort transversal avant (110) du mât d'accrochage (104) et le carter (102a) du moteur (102), une chape mâle frontale (112),
- centrée sur le plan médian vertical (XZ) et sur l'autre parmi le renfort transversal avant (110) du mât d'accrochage (104) et le carter (102a) du moteur (102), une chape femelle frontale (113),
- au niveau du plan médian vertical (XZ) et sur l'un parmi le longeron inférieur (104b) du mât d'accrochage (104) et le carter (102a) du moteur (102), une chape mâle inférieure (114),
- centrée sur le plan médian vertical (XZ) et sur l'autre parmi le longeron inférieur (104b) du mât d'accrochage (104) et le carter (102a) du moteur (102), une chape femelle inférieure (115),
- pour chaque panneau latéral bâbord et tribord (104c-d) ou sur le renfort transversal avant (110), une première chape mâle bâbord (107) et tribord s'étendant orthogonalement au plan médian vertical (XZ),
- pour le carter (102a) du moteur (102), des deuxièmes chapes mâle bâbord (109) et tribord,
- au moins des premières bielles bâbord (118a) et tribord,
- un axe frontal (120) reliant la chape mâle frontale (112) et la chape femelle frontale (113),
- un axe inférieur (122) reliant la chape mâle inférieure (114) et la chape femelle inférieure (115),
- des premiers axes bâbord (124) et tribord reliant la première chape mâle bâbord (107) et tribord avec la première bielle bâbord (118a) et tribord,
- des deuxièmes axes bâbord (126) et tribord reliant la deuxième chape mâle bâbord (109) et tribord avec la première bielle bâbord (118a) et tribord.

2. Assemblage d'un mât d'accrochage (104) avec un moteur d'aéronef (100) selon la revendication 1, **caractérisé en ce que** la chape mâle frontale (112) est agencée sur le renfort transversal avant (110) du mât d'accrochage (104) et la chape femelle frontale (113) est agencée sur le carter (102a) du moteur (102).

3. Assemblage d'un mât d'accrochage (104) avec un moteur d'aéronef (100) selon la revendication 1, **caractérisé en ce que** la chape femelle frontale (113) est agencée sur le renfort transversal avant (110) du mât d'accrochage (104) et la chape mâle frontale (112) est agencée sur le carter (102a) du moteur (102).

4. Assemblage d'un mât d'accrochage (104) avec un moteur d'aéronef (100) selon l'une des revendications 1 à 3, **caractérisé en ce que** la chape mâle inférieure (114) est agencée sur le longeron inférieur (104b) du mât d'accrochage (104) et la chape femelle inférieure (115) est agencée sur le carter (102a) du moteur (102).

5. Assemblage d'un mât d'accrochage (104) avec un moteur d'aéronef (100) selon l'une des revendications 1 à 3, **caractérisé en ce que** la chape femelle inférieure (115) est agencée sur le longeron inférieur (104b) du mât d'accrochage (104) et la chape mâle inférieure (114) est agencée sur le carter (102a) du moteur (102).

6. Assemblage d'un mât d'accrochage (104) avec un moteur d'aéronef (100) selon les revendications 2 et 4, **caractérisé en ce que** le carter (102a) du moteur (102) prend la forme d'une couronne et **en ce que** chaque chape femelle frontale et inférieure (113, 115) du carter (102a) du moteur (102) est constituée par des parois (113a, 115a-b) du carter (102a) disposées de part et d'autre du plan médian vertical (XZ) et constituant des excroissances du carter (102a) entre lesquelles sont disposées les chapes mâle frontale (112) et inférieure (114) du mât d'accrochage (104).

7. Assemblage d'un mât d'accrochage (104) avec un moteur d'aéronef (100) selon l'une des revendications précédentes, **caractérisé en ce que** la chape mâle frontale (112) est constituée de deux ferrures frontales (110a-b).

8. Assemblage d'un mât d'accrochage (104) avec un moteur d'aéronef (100) selon l'une des revendications précédentes, **caractérisé en ce que** la chape mâle inférieure (114) est constituée de deux ferrures inférieures (134a-b).

9. Assemblage d'un mât d'accrochage (104) avec un moteur d'aéronef (100) selon l'une des revendications précédentes, **caractérisé en ce que** l'attache moteur avant (150) comporte également des deuxièmes bielles bâbord (118b) et tribord, les premiers axes bâbord (124) et tribord reliant également la première chape mâle bâbord (107) et tribord avec la deuxième bielle bâbord (118b) et tribord, les deuxièmes axes bâbord (126) et tribord reliant également la deuxième chape mâle bâbord (109) et tribord avec la deuxième bielle bâbord (118b) et tribord, les première et deuxième bielles bâbord (118a, 118b) et tribord étant montées en parallèle autour des première et deuxième chapes mâle bâbord (107, 109) et tribord.

10. Assemblage d'un mât d'accrochage (104) avec un moteur d'aéronef (100) selon l'une des revendications 1 à 9, **caractérisé en ce que** les axes de l'une des paires parmi la paire comportant le premier axe bâbord (124) et le deuxième axe bâbord (126) et la paire comportant le premier axe tribord et le deuxième axe tribord, relient le mât d'accrochage (104) au carter (102a) du moteur (102) de manière ajustée, **en ce que** les axes de l'autre des paires relient le mât d'accrochage (104) au carter (102a) du moteur (102) avec un jeu, **en ce que** l'axe inférieur (122) relie le mât d'accrochage (104) au carter (102a) du moteur (102) de manière ajustée et **en ce que** l'axe frontal (120) relie le mât d'accrochage (104) au carter (102a) du moteur (102) avec un jeu.

11. Assemblage d'un mât d'accrochage (104) avec un moteur d'aéronef (100) selon l'une des revendications 1 à 9, **caractérisé en ce que** les axes de l'une des paires parmi la paire comportant le premier axe bâbord (124) et le deuxième axe bâbord (126) et la paire comportant le premier axe tribord et le deuxième axe tribord, relient le mât d'accrochage (104) au carter (102a) du moteur (102) de manière ajustée, **en ce que** les axes de l'autre des paires relient le mât d'accrochage (104) au carter (102a) du moteur (102) avec un jeu, **en ce que** l'axe inférieur (122) relie le mât d'accrochage (104) au carter (102a) du moteur (102) avec un jeu et **en ce que** l'axe frontal (120) relie le mât d'accrochage (104) au carter (102a) du moteur (102) de manière ajustée.

12. Aéronef (100) comportant un assemblage d'un mât d'accrochage (104) avec un moteur d'aéronef (100) selon l'une des revendications précédentes.

## Patentansprüche

1. Anordnung einer Aufhängungsstruktur (104) mit einem Triebwerk eines Luftfahrzeugs (100), wobei die Aufhängungsstruktur (104) eine primäre Struktur aufweist, die einen oberen Holm (104a), einen unteren Holm (104b), eine backbordseitige und eine steuerbordseitige Seitenplatte (104c-d) und eine vordere Querversteifung (110) umfasst, wobei die Anordnung eine vertikale Mittelebene (XZ) aufweist und eine vordere Triebwerksaufhängung (150), die an der Aufhängungsstruktur (104) und an einem Gehäuse (102a) des Triebwerks (102) befestigt ist, aufweist und umfasst:
- an der vertikalen Mittelebene (XZ) und an einem von der vorderen Querversteifung (110) der Aufhängungsstruktur (104) und dem Gehäuse (102a) des Triebwerks (102), ein frontales Gabelkopfgegenstück (112),
- zentriert auf der vertikalen Mittelebene (XZ) und an dem anderen von der vorderen Querversteifung (110) der Aufhängungsstruktur (104) und dem Gehäuse (102a) des Triebwerks (102), einen frontalen Gabelkopf (113),
- an der vertikalen Mittelebene (XZ) und an einem von dem unteren Holm (104b) der Aufhängungsstruktur (104) und dem Gehäuse (102a) des Triebwerks (102), ein unteres Gabelkopfgegenstück (114),
- zentriert auf der vertikalen Mittelebene (XZ) und an dem anderen von dem unteren Holm (104b) der Aufhängungsstruktur (104) und dem Gehäuse (102a) des Triebwerks (102), einen unteren Gabelkopf (115),
- für jede backbordseitige und steuerbordseitige Seitenplatte (104c-d) oder an der vorderen Querversteifung (110), ein erstes backbordseitiges (107) und steuerbordseitiges Gabelkopfgegenstück, das sich orthogonal zu der vertikalen Mittelebene (XZ) erstreckt,
- für das Gehäuse (102a) des Triebwerks (102), zweite backbordseitige (109) und steuerbordseitige Gabelkopfgegenstücke,
- mindestens erste backbordseitige (118a) und steuerbordseitige Pleuelstangen,
- eine frontale Achse (120), die das frontale Gabelkopfgegenstück (112) und den frontalen Gabelkopf (113) verbindet,
- eine untere Achse (122), die das untere Gabelkopfgegenstück (114) und den unteren Gabelkopf (115) verbindet,
- erste backbordseitige (124) und steuerbordseitige Achsen, die das erste backbordseitige (107) und steuerbordseitige Gabelkopfgegenstück mit der ersten backbordseitigen (118a) und steuerbordseitigen Pleuelstange verbinden,
- zweite backbordseitige (126) und steuerbordseitige Achsen, die das zweite backbordseitige (109) und steuerbordseitige Gabelkopfgegenstück mit der ersten backbordseitigen (118a) und steuerbordseitigen Pleuelstange verbinden.

2. Anordnung einer Aufhängungsstruktur (104) mit einem Triebwerk eines Luftfahrzeugs (100) nach Anspruch 1, **dadurch gekennzeichnet, dass** das frontale Gabelkopfgegenstück (112) an der vorderen Querversteifung (110) der Aufhängungsstruktur (104) angeordnet ist und der frontale Gabelkopf (113) an dem Gehäuse (102a) des Triebwerks (102) angeordnet ist.

3. Anordnung einer Aufhängungsstruktur (104) mit einem Triebwerk eines Luftfahrzeugs (100) nach Anspruch 1, **dadurch gekennzeichnet, dass** der frontale Gabelkopf (113) an der vorderen Querversteifung (110) der Aufhängungsstruktur (104) angeordnet ist und das frontale Gabelkopfgegenstück (112) an dem Gehäuse (102a) des Triebwerks (102) angeordnet ist.

4. Anordnung einer Aufhängungsstruktur (104) mit einem Triebwerk eines Luftfahrzeugs (100) nach einem der Ansprüche 1 bis 3, **dadurch gekennzeichnet, dass** das untere Gabelkopfgegenstück (114) an dem unteren Holm (104b) der Aufhängungsstruktur (104) angeordnet ist und der untere Gabelkopf (115) an dem Gehäuse (102a) des Triebwerks (102) angeordnet ist.

5. Anordnung einer Aufhängungsstruktur (104) mit einem Triebwerk eines Luftfahrzeugs (100) nach einem der Ansprüche 1 bis 3, **dadurch gekennzeichnet, dass** der untere Gabelkopf (115) an dem unteren Holm (104b) der Aufhängungsstruktur (104) angeordnet ist und das untere Gabelkopfgegenstück (114) an dem Gehäuse (102a) des Triebwerks (102) angeordnet ist.

6. Anordnung einer Aufhängungsstruktur (104) mit einem Triebwerk eines Luftfahrzeugs (100) nach einem der Ansprüche 2 und 4, **dadurch gekennzeichnet, dass** das Gehäuse (102a) des Triebwerks (102) die Form eines Kranzes annimmt, und dadurch, dass jeder frontale und untere Gabelkopf (113, 115) des Gehäuses (102a) des Triebwerks (102) aus Wänden (113a, 115a-b) des Gehäuses (102a) besteht, die beiderseits der vertikalen Mittelebene (XZ) angeordnet sind und Protuberanzen des Gehäuses (102a) bilden, zwischen denen das frontale (112) und untere (114) Gabelkopfgegenstück der Aufhängungsstruktur (104) angeordnet sind.

7. Anordnung einer Aufhängungsstruktur (104) mit einem Triebwerk eines Luftfahrzeugs (100) nach einem der vorhergehenden Ansprüche, **dadurch gekennzeichnet, dass** das frontale Gabelkopfgegenstück (112) aus zwei frontalen Beschlägen (110a-b) besteht.

8. Anordnung einer Aufhängungsstruktur (104) mit einem Triebwerk eines Luftfahrzeugs (100) nach einem der vorhergehenden Ansprüche, **dadurch gekennzeichnet, dass** das untere Gabelkopfgegenstück (114) aus zwei unteren Beschlägen (134a-b) besteht.

9. Anordnung einer Aufhängungsstruktur (104) mit einem Triebwerk eines Luftfahrzeugs (100) nach einem der vorhergehenden Ansprüche, **dadurch gekennzeichnet, dass** die vordere Triebwerksaufhängung (150) außerdem zweite backbordseitige (118b) und steuerbordseitige Pleuelstangen aufweist, wobei die ersten backbordseitigen (124) und steuerbordseitigen Achsen auch das erste backbordseitige (107) und steuerbordseitige Gabelkopfgegenstück mit der zweiten backbordseitigen (118b) und steuerbordseitigen Pleuelstange verbinden, die zweiten backbordseitigen (126) und steuerbordseitigen Achsen auch das zweite backbordseitige (109) und steuerbordseitige Gabelkopfgegenstück mit der zweiten backbordseitigen (118b) und steuerbordseitigen Pleuelstange verbinden, die erste und die zweite backbordseitige (118a, 118b) und steuerbordseitige Pleuelstange parallel um ein erstes und ein zweites backbordseitiges (107, 109) und steuerbordseitiges Gabelkopfgegenstück herum angebracht sind.

10. Anordnung einer Aufhängungsstruktur (104) mit einem Triebwerk eines Luftfahrzeugs (100) nach einem der Ansprüche 1 bis 9, **dadurch gekennzeichnet, dass** die Achsen eines der Paare von dem Paar, das die erste backbordseitige Achse (124) und die zweite backbordseitige Achse (126) umfasst, und dem Paar, das die erste steuerbordseitige Achse und die zweite steuerbordseitige Achse umfasst, die Aufhängungsstruktur (104) mit dem Gehäuse (102a) des Triebwerks (102) passgenau verbinden, dadurch, dass die Achsen des anderen von den Paaren die Aufhängungsstruktur (104) mit dem Gehäuse (102a) des Triebwerks (102) mit einem Spiel verbinden, dadurch, dass die untere Achse (122) die Aufhängungsstruktur (104) mit dem Gehäuse (102a) des Triebwerks (102) passgenau verbindet, und dadurch, dass die frontale Achse (120) die Aufhängungsstruktur (104) mit dem Gehäuse (102a) des Triebwerks (102) mit einem Spiel verbindet.

11. Anordnung einer Aufhängungsstruktur (104) mit einem Triebwerk eines Luftfahrzeugs (100) nach einem der Ansprüche 1 bis 9, **dadurch gekennzeichnet, dass** die Achsen eines der Paare von dem Paar, das die erste backbordseitige Achse (124) und die zweite backbordseitige Achse (126) umfasst, und dem Paar, das die erste steuerbordseitige Achse und die zweite steuerbordseitige Achse umfasst, die Aufhängungsstruktur (104) mit dem Gehäuse (102a) des Triebwerks (102) passgenau verbinden, dadurch, dass die Achsen des anderen von den Paaren die Aufhängungsstruktur (104) mit dem Gehäuse (102a) des Triebwerks (102) mit einem Spiel verbinden, dadurch, dass die untere Achse (122) die Aufhängungsstruktur (104) mit dem Gehäuse (102a) des Triebwerks (102) mit einem Spiel verbindet, und dadurch, dass die frontale Achse (120) die Aufhängungsstruktur (104) mit dem Gehäuse (102a) des Triebwerks (102) passgenau verbindet.

12. Luftfahrzeug (100), welches eine Anordnung einer Aufhängungsstruktur (104) mit einem Triebwerk eines Luftfahrzeugs (100) nach einem der vorhergehenden Ansprüche aufweist.

## Claims

1. Assembly of an attachment pylon (104) with an engine of an aircraft (100), the attachment pylon (104) comprising a primary structure comprising an upper spar (104a), a lower spar (104b), port and starboard lateral panels (104c-d) and a front transverse reinforcement (110), the assembly having a vertical mid-plane (XZ) and comprising a front engine mount (150) fastened to the attachment pylon (104) and to a casing (102a) of the engine (102), and comprising:
- in the vertical mid-plane (XZ) and on one of the front transverse reinforcement (110) of the attachment pylon (104) and the casing (102a) of the engine (102), a front tang (112),
- centred on the vertical mid-plane (XZ) and on the other of the front transverse reinforcement (110) of the attachment pylon (104) and the casing (102a) of the engine (102), a front clevis (113),
- in the vertical mid-plane (XZ) and on one of the lower spar (104b) of the attachment pylon (104) and the casing (102a) of the engine (102), a lower tang (114),
- centred on the vertical mid-plane (XZ) and on the other of the lower spar (104b) of the attachment pylon (104) and the casing (102a) of the engine (102), a lower clevis (115),
- for each port and starboard lateral panel (104c-d) or on the front transverse reinforcement (110), a first port tang (107) and a first starboard tang extending orthogonally to the vertical mid-plane (XZ),
- for the casing (102a) of the engine (102), a second port tang (109) and a second starboard tang,
- at least a first port link (118a) and a first starboard link,
- a front pin (120) connecting the front tang (112) and the front clevis (113),
- a lower pin (122) connecting the lower tang (114) and the lower clevis (115),
- a first port pin (124) and a first starboard pin connecting the first port tang (107) and the first starboard tang with the first port link (118a) and the first starboard link,
- a second port pin (126) and a second starboard pin connecting the second port tang (109) and the second starboard tang with the first port link (118a) and the first starboard link.

2. Assembly of an attachment pylon (104) with an engine of an aircraft (100) according to Claim 1, **characterized in that** the front tang (112) is arranged on the front transverse reinforcement (110) of the attachment pylon (104) and the front clevis (113) is arranged on the casing (102a) of the engine (102).

3. Assembly of an attachment pylon (104) with an engine of an aircraft (100) according to Claim 1, **characterized in that** the front clevis (113) is arranged on the front transverse reinforcement (110) of the attachment pylon (104) and the front tang (112) is arranged on the casing (102a) of the engine (102).

4. Assembly of an attachment pylon (104) with an engine of an aircraft (100) according to one of Claims 1 to 3, **characterized in that** the lower tang (114) is arranged on the lower spar (104b) of the attachment pylon (104) and the lower clevis (115) is arranged on the casing (102a) of the engine (102).

5. Assembly of an attachment pylon (104) with an engine of an aircraft (100) according to one of Claims 1 to 3, **characterized in that** the lower clevis (115) is arranged on the lower spar (104b) of the attachment pylon (104) and the lower tang (114) is arranged on the casing (102a) of the engine (102).

6. Assembly of an attachment pylon (104) with an engine of an aircraft (100) according to Claims 2 and 4, **characterized in that** the casing (102a) of the engine (102) takes the form of a ring and **in that** each front and lower clevis (113, 115) of the casing (102a) of the engine (102) is formed by walls (113a, 115a-b) of the casing (102a) positioned on either side of the vertical mid-plane (XZ) and forming protrusions from the casing (102a) between which are positioned the front tang (112) and lower tang (114) of the attachment pylon (104).

7. Assembly of an attachment pylon (104) with an engine of an aircraft (100) according to one of the preceding claims, **characterized in that** the front tang (112) is formed by two front plates (110a-b).

8. Assembly of an attachment pylon (104) with an engine of an aircraft (100) according to one of the preceding claims, **characterized in that** the lower tang (114) is formed by two lower plates (134a-b).

9. Assembly of an attachment pylon (104) with an engine of an aircraft (100) according to one of the preceding claims, **characterized in that** the front engine mount (150) also comprises a second port link (118b) and a second starboard link, the first port pin (124) and the first starboard pin also connecting the first port tang (107) and the first starboard tang with the second port link (118b) and the second starboard link, the second port pin (126) and the second starboard pin also connecting the second port tang (109) and the second starboard tang with the second port link (118b) and the second starboard link, the first and second port links (118a, 118b) and the first and second starboard links being mounted in parallel around the first and second port tangs (107, 109) and the first and second starboard tangs.

10. Assembly of an attachment pylon (104) with an engine of an aircraft (100) according to one of Claims 1 to 9, **characterized in that** the pins of one of the pairs among the pair comprising the first port pin (124) and the second port pin (126) and the pair comprising the first starboard pin and the second starboard pin connect the attachment pylon (104) to the casing (102a) of the engine (102) without play, **in that** the pins of the other of the pairs connect the attachment pylon (104) to the casing (102a) of the engine (102) with play, **in that** the lower pin (122) connects the attachment pylon (104) to the casing (102a) of the engine (102) without play and **in that** the front pin (120) connects the attachment pylon (104) to the casing (102a) of the engine (102) with play.

11. Assembly of an attachment pylon (104) with an engine of an aircraft (100) according to one of Claims 1 to 9, **characterized in that** the pins of one of the pairs among the pair comprising the first port pin (124) and the second port pin (126) and the pair comprising the first starboard pin and the second starboard pin connect the attachment pylon (104) to the casing (102a) of the engine (102) without play, **in that** the pins of the other of the pairs connect the attachment pylon (104) to the casing (102a) of the engine (102) with play, **in that** the lower pin (122) connects the attachment pylon (104) to the casing (102a) of the engine (102) with play and **in that** the front pin (120) connects the attachment pylon (104) to the casing (102a) of the engine (102) without play.

12. Aircraft (100) comprising an assembly of an attachment pylon (104) with an engine of the aircraft (100) according to one of the preceding claims.
